# EUROPEAN PATENT APPLICATION

(11) **EP 4 518 247 A1**
(43) Date of publication of application: **05.03.2025**
(21) Application number: 23814817.5
(22) Date of filing: 20.04.2023
(51) Int. Cl.: H04L 9/40

(54) **CERTIFICATION METHOD AND COMMUNICATION APPARATUS**

(30) Priority: 30.05.2022 CN 202210599239
(71) Applicant: Huawei Technologies Co., Ltd., Shenzhen, Guangdong 518129 (CN)
(72) Inventor: ZHAO, Xian, Shenzhen, Guangdong 518129 (CN); CAO, Longyu, Shenzhen, Guangdong 518129 (CN)
(74) Representative: Goddar, Heinz J.
(86) International application number: PCT/CN2023/089467
(87) International publication number: WO 2023/231631

(57) **Abstract**

This application provides an authentication method and a communication apparatus, to resolve a problem that an operator cannot support identity authentication on a management service outsourcing party, and is applicable to a 5G communication system. The method includes: An exposure governance management function entity receives information about a management service outsourcing device from a third-party device, where the management service outsourcing device is configured to invoke a network management capability exposed to the third-party device; the exposure governance management function entity determines, based on the information about the management service outsourcing device, information used for authenticating an identity of the management service outsourcing device; and the exposure governance management function entity sends the information used for authenticating the identity of the management service outsourcing device to the management service outsourcing device. The exposure governance management function entity can generate authentication information based on the information about the management service outsourcing device, to implement authentication on the identity of the management service outsourcing device.

## Description

This application claims priority to Chinese Patent Application No. 202210599239.X, filed with the China National Intellectual Property Administration on May 30, 2022 and entitled "AUTHENTICATION METHOD AND COMMUNICATION APPARATUS", which is incorporated herein by reference in its entirety.

### TECHNICAL FIELD

This application relates to the communication field, and in particular, to an authentication method and a communication apparatus.

### BACKGROUND

A non-public network (non-public network, NPN), which may also be referred to as a dedicated network or a private network, is a network established to satisfy a non-public requirement. The NPN established by an operator may be used by a third party (such as a vertical industry customer or a slice user). Without permission of the third party, a common terminal device cannot access the NPN. The 3^{rd} Generation Partnership Project (3^{rd} Generation Partnership Project, 3GPP) standard defines the following two types of NPNs: a stand-alone non-public network (stand-alone non-public network, SNPN) and a public network integrated non-public network (public network integrated non-public network, PNI-NPN).

For the two types of NPNs: the SNPN and the PNI-NPN, the third party may perform network management based on a network management capability exposed by the operator; or the third party may outsource a part of network management capabilities exposed by the operator to another company or enterprise that provides network operation, orchestration, and management services (briefly referred to as a management service outsourcing party), to implement network management through the management service outsourcing party. When the third party and the management service outsourcing party are to use the exposed network management capability, the operator needs to perform identity authentication on the third party and the management service outsourcing party. Only when the identity authentication succeeds, the third party and the management service outsourcing party can invoke a corresponding management service and implement network management based on the invoked management service. Currently, the operator can implement identity authentication on the third party based on a tenant registration request sent by the third party, but cannot support identity authentication on the management service outsourcing party, and consequently the management service outsourcing party cannot invoke a management service to manage a network serving the third party.

### SUMMARY

This application provides an authentication method and a communication apparatus, to resolve a problem that an operator cannot support identity authentication on a management service outsourcing party.

To achieve the foregoing objective, this application uses the following technical solutions.

According to a first aspect, an authentication method is provided. The method includes: An exposure governance management function entity receives information about a management service outsourcing device from a third-party device, where the management service outsourcing device is configured to invoke a network management capability exposed to the third-party device. The exposure governance management function entity determines, based on the information about the management service outsourcing device, information used for authenticating an identity of the management service outsourcing device. The exposure governance management function entity sends the information used for authenticating the identity of the management service outsourcing device to the management service outsourcing device.

Based on the authentication method according to the first aspect, the exposure governance management function entity may generate and send, based on the information about the management service outsourcing device sent by the third-party device, the information used for authenticating the identity of the management service outsourcing device. When authenticating the management service outsourcing device, the exposure governance management function entity may determine, based on received authentication information and the information used for authenticating the identity of the management service outsourcing device, whether a to-be-authenticated device is the management service outsourcing device, so that a management service outsourcing party can be authenticated. Therefore, based on the information about the management service outsourcing device and the exposure governance management function entity, not only tenant management can be implemented, but also authentication on the management service outsourcing party by the operator can be implemented, so that a network management capability of the third party can be improved and more refined network management can be implemented.

Further, the method according to the first aspect may include: The exposure governance management function entity receives authentication information from a first device. When the authentication information matches the information used for authenticating the identity of the management service outsourcing device, the exposure governance management function entity determines that the first device is the management service outsourcing device. In this way, the exposure governance management function entity may determine, based on the information used for authenticating the identity of the management service outsourcing device, whether the first device requesting authentication is the management service outsourcing device, to authenticate the management service outsourcing device, and improve authentication reliability.

In a possible design solution, the method according to the first aspect may further include: The exposure governance management function entity sends first indication information to the first device, where the first indication information indicates that authentication on the first device succeeds. In this way, the first device may obtain an authentication result based on the first indication information. When the authentication result indicates that the authentication succeeds, the first device may request the exposure governance management function entity to invoke a management service, to manage a network serving the third party, and optimize network management serving a third-party network.

In a possible design solution, the information about the management service outsourcing device may include an IP address of the management service outsourcing device. The exposure governance management function entity sends the information used for authenticating the identity of the management service outsourcing device, which may include: The exposure governance management function entity sends the information used for authenticating the identity of the management service outsourcing device to the management service outsourcing device based on the IP address of the management service outsourcing device. In this way, the exposure governance management function entity may send, to the management service outsourcing device based on an identifier of the management service outsourcing device in the information about the management service outsourcing device, the information used for authenticating the identity of the management service outsourcing device, so that authentication efficiency for the management service outsourcing device can be improved.

In a possible design solution, the information about the management service outsourcing device includes information about a management service that can be invoked by the management service outsourcing device. In this way, the exposure governance management function entity may determine invocation information of the management service outsourcing device based on the information about the management service outsourcing device, and manage the invocation information of the management service outsourcing device. This can avoid an invocation error or exceeding an invocation permission, and improve reliability of network exposure management.

In a possible design solution, the method according to the first aspect may further include: The exposure governance management function entity receives second indication information from the third-party device. The second indication information indicates the exposure governance management function entity to perform one or more operations of addition, deletion, modification, or query on the information about the management service outsourcing device. In this way, the exposure governance management function entity may further update the information about the management service outsourcing device in real time based on the second indication information, to update the information used for authenticating the identity of the management service outsourcing device, so as to improve authentication reliability.

According to a second aspect, an authentication method is provided. The method includes: A third-party device sends information about a management service outsourcing device to an exposure governance management function entity. The management service outsourcing device is configured to invoke a network management capability exposed to the third-party device. The third-party device receives, from the exposure governance management function entity, information used for authenticating an identity of the management service outsourcing device. The information used for authenticating the identity of the management service outsourcing device is determined based on the information about the management service outsourcing device. The third-party device sends the information used for authenticating the identity of the management service outsourcing device to the management service outsourcing device.

In a possible design solution, the information about the management service outsourcing device includes information about a management service that can be invoked by the management service outsourcing device.

In a possible design solution, the method according to the second aspect may further include: The third-party device receives first indication information from a first device, where the first indication information indicates that authentication on the first device succeeds, and the first device is the management service outsourcing device.

In a possible design solution, the method according to the second aspect may further include: The third-party device sends second indication information to the exposure governance management function entity, where the second indication information indicates the exposure governance management function entity to perform one or more operations of addition, deletion, modification, or query on the information about the management service outsourcing device.

According to a third aspect, an authentication method is provided. The method includes: A first device obtains authentication information, where the first device is a management service outsourcing device, and the management service outsourcing device is configured to invoke a network management capability exposed to a third-party device. The first device sends the authentication information to an exposure governance management function entity.

In a possible design solution, the authentication information includes information used for authenticating an identity of the management service outsourcing device. A first device obtains authentication information, which may include: The first device receives, from the exposure governance management function entity, the information used for authenticating the identity of the management service outsourcing device.

In another possible design solution, the authentication information includes information used for authenticating an identity of the management service outsourcing device. A first device obtains authentication information, which may include: The first device receives, from the third-party device, the information used for authenticating the identity of the management service outsourcing device.

In a possible design solution, the method according to the third aspect may further include: The first device receives first indication information from the exposure governance management function entity, where the first indication information indicates that authentication on the first device succeeds.

In a possible design solution, the method according to the third aspect may further include: The first device sends the first indication information to the third-party device.

In addition, for technical effects of the methods according to the second aspect and the third aspect, refer to the technical effects of the method according to the first aspect. Details are not described herein again.

According to a fourth aspect, a communication apparatus is provided. The apparatus includes a processing module and a transceiver module. The transceiver module is configured to receive information about a management service outsourcing device from a third-party device, where the management service outsourcing device is configured to invoke a network management capability exposed to the third-party device. The processing module is configured to determine, based on the information about the management service outsourcing device, information used for authenticating an identity of the management service outsourcing device. The transceiver module is further configured to send the information used for authenticating the identity of the management service outsourcing device to the management service outsourcing device.

Further, the transceiver module is configured to receive authentication information from a first device. The processing module is configured to: when the authentication information matches the information used for authenticating the identity of the management service outsourcing device, determine that the first device is the management service outsourcing device.

In a possible design solution, the transceiver module is configured to send first indication information to the first device, where the first indication information indicates that authentication on the first device succeeds.

In a possible design solution, the information about the management service outsourcing device may include an IP address of the management service outsourcing device. The transceiver module is configured to send the information used for authenticating the identity of the management service outsourcing device to the management service outsourcing device based on the IP address of the management service outsourcing device.

In a possible design solution, the information about the management service outsourcing device includes information about a management service that can be invoked by the management service outsourcing device.

In a possible design solution, the transceiver module is configured to receive second indication information from the third-party device, where the second indication information indicates an exposure governance management function entity to perform one or more operations of addition, deletion, modification, or query on the information about the management service outsourcing device.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the method according to the first aspect.

It should be noted that the communication apparatus according to the fourth aspect may be a network device, for example, the exposure governance management function entity, may be a chip (system) or another part or component that may be disposed in a network device, or may be an apparatus including a network device. This is not limited in this application.

In addition, for technical effects of the communication apparatus according to the fourth aspect, refer to the technical effects of the method according to the first aspect. Details are not described herein again.

According to a fifth aspect, a communication apparatus is provided. The apparatus includes a sending module and a receiving module. The sending module is configured to send information about a management service outsourcing device to an exposure governance management function entity, where the management service outsourcing device is configured to invoke a network management capability exposed to the apparatus. The receiving module is configured to receive, from the exposure governance management function entity, information used for authenticating an identity of the management service outsourcing device, where the information used for authenticating the identity of the management service outsourcing device is determined based on the information about the management service outsourcing device. The sending module is further configured to send the information used for authenticating the identity of the management service outsourcing device to the management service outsourcing device.

In a possible design solution, the information about the management service outsourcing device includes information about a management service that can be invoked by the management service outsourcing device.

In a possible design solution, the receiving module is further configured to receive first indication information from a first device, where the first indication information indicates that authentication on the first device succeeds, and the first device is the management service outsourcing device.

In a possible design solution, the sending module is further configured to send second indication information to the exposure governance management function entity, where the second indication information indicates the exposure governance management function entity to perform one or more operations of addition, deletion, modification, or query on the information about the management service outsourcing device.

Optionally, the sending module and the receiving module may be integrated into one module, for example, a transceiver module. The transceiver module is configured to implement a sending function and a receiving function of the communication apparatus according to the fifth aspect.

Optionally, the communication apparatus according to the fifth aspect may further include a processing module. The processing module is configured to implement a processing function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the method according to the second aspect.

It should be noted that the communication apparatus according to the fifth aspect may be a network device, for example, a third-party device, may be a chip (system) or another part or component that may be disposed in a network device, or may be an apparatus including a network device. This is not limited in this application.

In addition, for technical effects of the communication apparatus according to the fifth aspect, refer to the technical effects of the method according to the first aspect. Details are not described herein again.

According to a sixth aspect, a communication apparatus is provided. The apparatus includes a processing module and a transceiver module. The processing module is configured to obtain authentication information, where the apparatus is a management service outsourcing device, and the management service outsourcing device is configured to invoke a network management capability exposed to a third-party device. The transceiver module is configured to send the authentication information to an exposure governance management function entity.

In a possible design solution, the authentication information may include information used for authenticating an identity of the management service outsourcing device. The transceiver module is configured to receive, from the exposure governance management function entity, the information used for authenticating the identity of the management service outsourcing device.

In another possible design solution, the authentication information may include information used for authenticating an identity of the management service outsourcing device. The transceiver module is configured to receive, from the third-party device, the information used for authenticating the identity of the management service outsourcing device.

In a possible design solution, the transceiver module is configured to receive first indication information from the exposure governance management function entity, where the first indication information indicates that authentication on the apparatus succeeds.

In a possible design solution, the transceiver module is configured to send the first indication information to the third-party device.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the method according to the third aspect.

It should be noted that the communication apparatus according to the sixth aspect may be a network device, for example, a first device, may be a chip (system) or another part or component that may be disposed in a network device, or may be an apparatus including a network device. This is not limited in this application.

In addition, for technical effects of the communication apparatus according to the sixth aspect, refer to the technical effects of the method according to the first aspect. Details are not described herein again.

According to a seventh aspect, a communication apparatus is provided. The apparatus includes a processor, and the processor is coupled to a memory. The memory is configured to store a computer program. The processor is configured to execute the computer program stored in the memory, to enable the communication apparatus to perform the method according to any one of the first aspect to the third aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be the exposure governance management function entity according to the first aspect, the third-party device according to the second aspect, or the first device according to the third aspect, or may be a chip (system) or another part or component that may be disposed in the exposure governance management function entity, the third-party device, or the first device, or may be an apparatus including the exposure governance management function entity, the third-party device, or the first device.

In addition, for technical effects of the communication apparatus according to the seventh aspect, refer to the technical effects of the method according to the first aspect. Details are not described herein again.

According to an eighth aspect, an authentication system is provided. The authentication system may include an exposure governance management function entity, a third-party device, and a management service outsourcing device.

Optionally, the authentication system according to the eighth aspect may further include a first device.

According to a ninth aspect, a computer-readable storage medium is provided. The computer-readable storage medium stores a computer program or instructions, and when the computer program or the instructions are run on a computer, the computer is enabled to perform the method according to any one of the first aspect to the third aspect.

According to a tenth aspect, a computer program product is provided. The computer program product includes a computer program or instructions, and when the computer program or the instructions are run on a computer, the computer is enabled to perform the method according to any one of the first aspect to the third aspect.

### BRIEF DESCRIPTION OF DRAWINGS

FIG. 1 is a diagram of a structure of exposing a network management capability;
FIG. 2 is a connection diagram of logical management functions in a management domain;
FIG. 3 is a schematic flowchart of tenant registration;
FIG. 4 is a diagram of an architecture of an authentication system according to an embodiment of this application;
FIG. 5 is a diagram of a wireless network capability exposure architecture based on an exposure governance management function entity according to an embodiment of this application;
FIG. 6 is a schematic flowchart of an authentication method according to an embodiment of this application;
FIG. 7 is a schematic flowchart of another authentication method according to an embodiment of this application;
FIG. 8 is a schematic flowchart of still another authentication method according to an embodiment of this application;
FIG. 9 is a schematic flowchart of still another authentication method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

For ease of understanding, the following first describes related technologies in embodiments of this application.

### 1. NPN

An NPN may also be referred to as a dedicated network or a private network, and is a network established to satisfy a non-public requirement. An NPN established by an operator may be used by a third party (such as a vertical industry customer or a slice user). Without permission of the third party, a common terminal device cannot access the NPN. The following two types of NPNs: an SNPN and a PNI-NPN are defined in the 3GPP standard.

The SNPN is a network function operated by an operator and does not depend on a public land mobile network (public land mobile network, PLMN). There are the following three SNPN-oriented NPN management modes.
(1) MNO Managed Mode: An NPN is completely managed by a mobile network operator (mobile network operator, MNO), and a vertical industry does not participate in management of the NPN.
(2) MNO-Vertical Managed Mode: An NPN is jointly managed by a mobile network operator and a vertical industry.
(3) Vertical Managed Mode: An NPN is completely managed by a vertical industry, and a mobile network operator does not participate in management of the NPN.

For the foregoing two management modes: MNO-Vertical Managed Mode and Vertical Managed Mode, the vertical industry may outsource a network management capability of the SNPN to another company providing network operation, orchestration, and management services (briefly referred to as a management service outsourcing party below).

The PNI-NPN is a non-public network deployed with support of the PLMN. PNI-NPN-oriented NPN management modes include the foregoing two types: MNO Managed Mode and MNO-Vertical Managed Mode. In MNO-Vertical Managed Mode, the vertical industry may also outsource a network management capability of the PNI-NPN to the management service outsourcing party.

### 2. Exposure governance management function (exposure governance management function, EGMF)

An EGMF is a logical management function proposed in the 3GPP to expose a network management capability in a management domain. Network management capability exposure means that an operator exposes the network management capability to an external third-party customer, such as a vertical industry customer, a slice user, and a shared operator. The third-party customer may also be referred to as a tenant of the operator. The third-party customer may manage a network of a served tenant through a network management system based on the network management capability exposed by the operator (for example, obtaining performance data of the network of the served tenant, and configuring a network parameter for the network of the served tenant). The network management system of the third-party customer may be a third-party operation, administration and maintenance (operation, administration and maintenance, OAM) system, a shared operator management system, or the like. For example, in a scenario of slice management or a private network oriented to a vertical industry, a slice user or a vertical industry customer is intended to obtain a specific network management capability from the operator through the network management capability exposure, to participate in management or data analysis of a slice network or the private network.

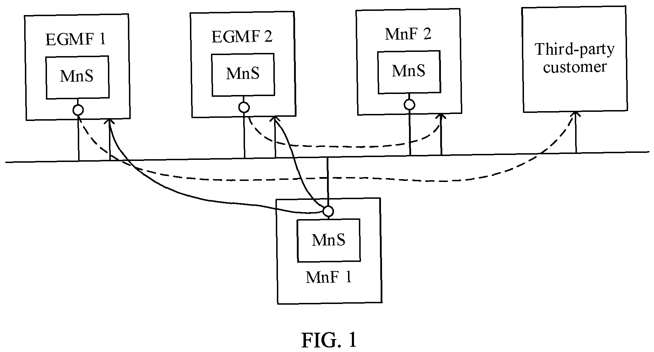

The EGMF is intended to expose operation and maintenance management information via the EGMF, such as configuration information, performance measurement information, and alarm/error information on a network side. With reference to FIG. 1, the following briefly describes a process in which the EGMF implements network exposure.

For example, FIG. 1 is a diagram of a structure of exposing a network management capability. A management function (management function, MnF) 1 may be, for example, an operator providing a network service, and may provide a corresponding management service (management service, MnS). The MnS is a network management capability that may be exposed by the operator. An MnF 2 may be, for example, a shared operator. The MnF 2 and a third-party customer (for example, a vertical industry customer) may be understood as customers (that is, tenants of the operator) who are not directly trusted in a management domain (for example, a management domain of the operator) in which the MnF 1 is located but have been authorized. The MnS provided by the MnF 1 needs to be invoked to implement network management by the MnF 2 and the third-party customer.

As shown in FIG. 1, the third-party customer may invoke, by using an EGMF 1, the MnS provided by the MnF 1, and the MnF 2 may invoke, by using an EGMF 2, the MnS provided by the MnF 1, so that the MnF 2 and the third-party customer can implement network management on a served tenant.

### 3. Cross domain management (cross domain management)

Cross domain management may correspond to a network management system (network management system, NMS) to manage a plurality of network element management systems in a unified manner. A logical management function, such as a network slice management function (network slice management function, NSMF), deployed at a cross domain layer provides various management services, which may be exposed by using an EGMF.

### 4. Domain management (domain management)

Domain management may correspond to an element management system (element management system, EMS) to manage a 5th generation (5th generation, 5G) base station or a 5G core network. For example, the domain management is radio access network (radio access network, RAN) domain management or core network (core network, CN) domain management. A logical management function, such as a network slice subnet management function (network slice subnet management function, NSSMF) or a management data analytics function (management data analytics function, MDAF), deployed at a domain layer is used for implementing a management service for the 5G base station or the 5G core network, and may provide various management services, which may be exposed by using an EGMF.

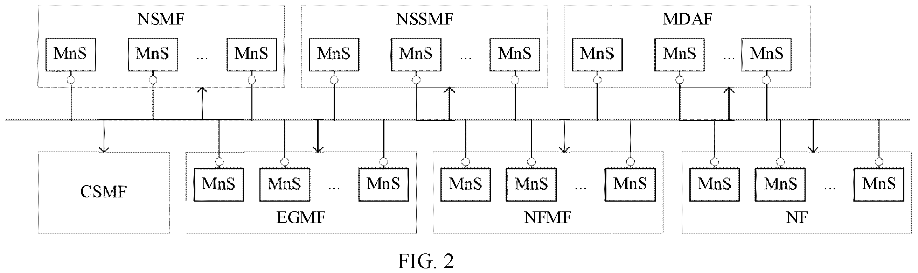

For example, FIG. 2 is a connection diagram of logical management functions in a management domain. As shown in FIG. 2, the management domain includes an NSMF, an NSSMF, an MDAF, an EGMF, a communication service management function (communication service management function, CSMF), a network function management function (network function management function, NFMF), and a network function (network function, NF).

The NSMF, the NSSMF, the MDAF, the EGMF, the NFMF, and the NF respectively provide different types of MnSs, and the EGMF may expose the MnSs provided by the various logical management functions.

It may be understood that the EGMF is a management function used for implementing management service invoking. An exposed network management capability in this embodiment of this application may be implemented by invoking a cross domain or domain management service.

Currently, when a third party uses a network management capability exposed by an operator, the operator needs to perform identity authentication on the third party. Only when the identity authentication succeeds can the third party invoke a corresponding management service to manage a serving network.

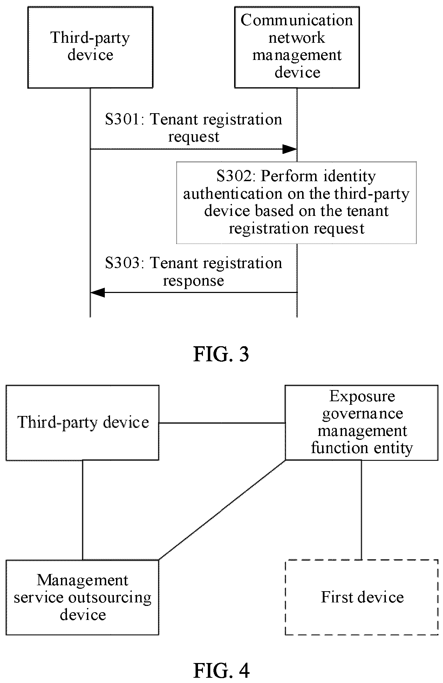

For example, FIG. 3 is a schematic flowchart of tenant registration. A third-party customer may implement identity authentication through the tenant registration process. It should be noted that, before the tenant registration is performed, an operator and a tenant (for example, a third party) sign a commercial agreement offline. Content of the signed commercial agreement may include network service guarantee provided by the operator for the tenant, a network management capability that can be exposed to the tenant, network resource information that can be obtained or operated by the tenant, or the like, and tenant subscription information is configured in a network management system of the operator. Further, as shown in FIG. 3, the tenant registration process includes the following steps.

S301: A third-party device sends a tenant registration request to a communication network management device.

Correspondingly, the communication network management device receives the tenant registration request from the third-party device.

The third-party device is configured to invoke a network management function exposed by the operator, to manage a serving network. A network management system, for example, a third-party OAM system, corresponding to the third-party customer is deployed on the third-party device.

The communication network management device is configured to manage a network service deployed by the operator. An operator management system corresponding to the operator is deployed on the communication network management device. The operator management system may include a business support system (business support system, BSS) and an operation support system (operations support system, OSS). The foregoing EGMF may be deployed on an OSS layer of the communication network management device. For specific functions of the BSS and the OSS, refer to related descriptions in a conventional technology. Details are not described herein again. It may be understood that the communication network management device may be a device including the foregoing EGMF, or a device including an exposure governance management function entity in the following embodiments.

In this embodiment of this application, the tenant registration request carries an identifier of the third-party customer (operator identification, operator ID) and a tenant profile (tenant profile).

For example, the identifier of the third-party customer may be a name of the third-party customer, for example, a name of a vertical industry enterprise. Alternatively, the identifier of the third-party customer may be a digital identifier representing the third-party customer, or the like.

The tenant profile is used for representing a description file of basic information of the third-party customer. For example, the tenant profile may include information about a management service signed by the third party and the operator, a service level specification (service level specification, SLS) requirement of the tenant, or the like. The SLS requirement may include an indicator requirement such as a latency, reliability, resource isolation, a quantity of terminal devices allowed for access, or a type of data that can be obtained.

S302: The communication network management device performs identity authentication on the third-party device based on the tenant registration request.

For example, after receiving the tenant registration request, the communication network management device queries and obtains, based on the identifier of the third-party customer carried in the tenant registration request, corresponding tenant subscription information from locally configured tenant subscription information, and then authenticates an identity of the third-party device based on the tenant subscription information, to verify validity of the third-party device.

Further, if the identity authentication on the third-party device succeeds, the communication network management device allocates a unique tenant identifier (tenant ID) to the third-party device. Alternatively, if the identity authentication on the third-party device does not succeed (which may also be understood as the identity authentication fails), the communication network management device does not allocate a corresponding tenant identifier to the third-party device.

S303: The communication network management device sends a tenant registration response to the third-party device.

Correspondingly, the third-party device receives the tenant registration response from the communication network management device. The tenant registration response carries a tenant registration result.

In this embodiment of this application, when the identity authentication on the third-party device succeeds, the tenant registration result indicates that registration of the third-party device succeeds or identity succeeds. Alternatively, when the identity authentication on the third-party device does not succeed, the tenant registration result indicates that registration of the third-party device fails or authentication fails.

In a possible implementation, the tenant registration result may be represented by using one bit. For example, "0" indicates that the registration of the third-party device succeeds or the identity authentication succeeds, and "1" indicates that the registration of the third-party device fails or the identity authentication fails. Alternatively, "1" indicates that the registration of the third-party device succeeds or the identity authentication succeeds, and "0" indicates that the registration of the third-party device fails or the identity authentication fails. This is not specifically limited in this embodiment of this application.

Optionally, in this embodiment of this application, in addition to the tenant registration result, the tenant registration response may further include a tenant identifier. Alternatively, in this embodiment of this application, when the identity authentication on the third-party device succeeds, the tenant registration response may further include the tenant identifier in addition to the tenant registration result. When the identity authentication on the third-party device fails, the tenant registration response may include the tenant registration result but does not include the tenant identifier. This is not specifically limited in this embodiment of this application.

It can be learned that, when the third party uses the network management capability exposed by the operator, the operator may implement the identity authentication on the third party based on the tenant registration request sent by the third-party device. However, when the third party outsources, to another network management party (that is, a management service outsourcing party), a part of network management capabilities exposed by the operator, based on a tenant registration request process shown in FIG. 3, the operator cannot support identity authentication on the management service outsourcing party. Consequently, the management service outsourcing party cannot invoke a management service to manage a network serving the third party.

Therefore, embodiments of this application provide an authentication method, to resolve a problem that the operator cannot support identity authentication on the management service outsourcing party, so that the management service outsourcing party can perform, within a control range of the operator management system, operation, maintenance, and management on the network serving the third party, thereby optimizing a service application of the third party.

The following describes technical solutions of this application with reference to the accompanying drawings.

The technical solutions in embodiments of this application are applicable to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G system, or a new radio (new radio, NR) system. The 5G system in this application includes a 5G system in non-standalone (non-standalone, NSA) networking or a 5G system in standalone (standalone, SA) networking. The technical solutions provided in this application are also applicable to a future communication system, for example, a 6th generation mobile communication system. A communication system to which embodiments of this application are applicable may alternatively be a PLMN network, a device-to-device (device-to-device, D2D) communication system, a machine-to-machine (machine-to-machine, M2M) communication system, an Internet of Things (Internet of Things, IoT) communication system, or another communication system. This is not specifically limited in embodiments of this application.

All aspects, embodiments, or features are presented in this application by describing a system that may include a plurality of devices, components, modules, and the like. It should be appreciated and understood that each system may include another device, component, and module, and the like, and/or may include none of devices, components, and modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, use of the term "example" is intended to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "relevant (corresponding, relevant)", and "corresponding (corresponding)" may sometimes be interchangeably used. It should be noted that meanings expressed by the terms are consistent when differences of the terms are not emphasized.

FIG. 4 is a diagram of an architecture of an authentication system to which the authentication method in embodiments of this application is applied. As shown in FIG. 4, the authentication system includes a third-party device, an exposure governance management function entity, and a management service outsourcing device.

The third-party device corresponds to a third-party customer, and the third-party customer is a customer, for example, a vertical industry customer, a slice user, or a shared operator, that uses a network service provided by an operator. In other words, the third-party customer may be an enterprise or organization (briefly referred to as a tenant below) that rents the network service provided by the operator. The third-party device is configured to manage the network service provided by the operator for the third-party customer. The exposure governance management function entity corresponds to the operator, and is configured to: implement identity authentication on the third-party device and the management service outsourcing device, and expose a network management capability provided by the operator. The management service outsourcing device corresponds to a management service outsourcing party. The management service outsourcing party is a network management agent that signs a management service outsourcing contract with the third-party customer. In other words, the third-party customer outsources a part of network management capabilities provided by the operator, and the management service outsourcing device is configured to invoke or manage the network management capabilities outsourced by the third-party customer.

The third-party device, the exposure governance management function entity, and the management service outsourcing device may directly communicate with each other, or may communicate with each other through forwarding by another device. This is not limited in this embodiment of this application.

The exposure governance management function entity receives information about the management service outsourcing device from the third-party device. The management service outsourcing device is configured to invoke a network management capability exposed to the third-party device. The exposure governance management function entity determines, based on the information about the management service outsourcing device, information used for authenticating an identity of the management service outsourcing device. Then, the exposure governance management function entity sends the information used for authenticating the identity of the management service outsourcing device to the management service outsourcing device. For a specific implementation process of the solution, refer to the following method embodiments.

It should be noted that there may be one or more management service outsourcing devices. In other words, the third-party customer may outsource the network management capability provided by the operator to one or more outsourcing parties.

Optionally, the authentication system provided in this embodiment of this application further includes a first device. The first device may be the management service outsourcing device, or may not be the management service outsourcing device. For example, the first device may send authentication information to the exposure governance management function entity. In a possible design solution, when the authentication information matches the information used for authenticating the identity of the management service outsourcing device, the exposure governance management function entity determines that the first device is the management service outsourcing device. In this case, authentication on the first device succeeds, and the first device can invoke the network management capability exposed by the operator to the third-party device. In another possible design solution, when the authentication information does not match the information used for authenticating the identity of the management service outsourcing device, the exposure governance management function entity determines that the first device is not the management service outsourcing device, authentication on the first device fails, and the first device cannot invoke the network management capability exposed by the operator to the third-party device. For a specific implementation process, refer to the following method embodiments.

In this embodiment of this application, the third-party device, the management service outsourcing device, or the first device may be a network device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, a home NodeB, HNB), a baseband unit (baseband unit, BBU), a wireless relay node, a wireless backhaul node, a transmission point (transmission and reception point, TRP or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

In this embodiment of this application, the exposure governance management function entity may be an exposure governance management function entity located in a cross domain (briefly referred to as a cross domain exposure governance management function entity below), or may be an exposure governance management function entity located in a domain (briefly referred to as a domain exposure governance management function entity below). The exposure governance management function entity may be deployed on the communication network management device shown in FIG. 3, or may be independently deployed on another network device. This is not limited in this embodiment of this application.

For example, the authentication system provided in this embodiment of this application may be used in a wireless network capability exposure architecture based on the exposure governance management function entity. For example, in FIG. 4, the third-party device may be a third-party device in the wireless network capability exposure architecture based on the exposure governance management function entity; the management service outsourcing device may be an exposure management service consumer entity in the wireless network capability exposure architecture based on the exposure governance management function entity; and the exposure governance management function entity may be an exposure governance management function entity corresponding to a cross domain management device or a domain management device in the wireless network capability exposure architecture based on the exposure governance management function entity. This is not limited in this embodiment of this application.

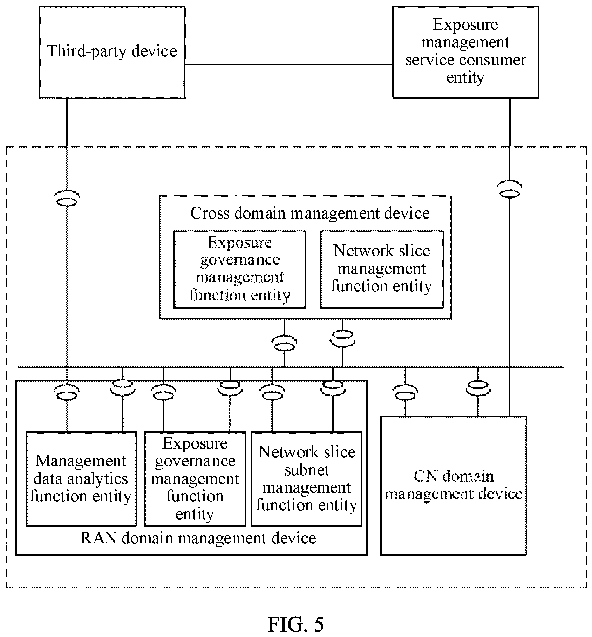

For example, FIG. 5 is a diagram of a wireless network capability exposure architecture based on an exposure governance management function entity according to an embodiment of this application. The wireless network capability exposure architecture based on the exposure governance management function entity includes a third-party device, an exposure management service consumer entity, a cross domain management device, and a domain management device. The domain management device includes a RAN domain management device and a CN domain management device. The third-party device and the exposure management service consumer entity may communicate with the cross domain management device, the RAN domain management device, and the CN domain management device through a representational state transfer (representational state transfer, REST) application programming interface (application programming interface, API).

As shown in FIG. 5, the exposure governance management function entity and a network slice management function entity are deployed on the cross domain management device, and the exposure governance management function entity, a management data analytics function entity, and a network slice subnet management function entity are deployed on the RAN domain management device. Network functions deployed on the management devices may provide different MnSs, and the third-party device and the exposure management service consumer entity may implement network management by invoking the MnS. It may be understood that another management function entity may be further deployed on the cross domain management device and the domain management device. This is not limited in this embodiment of this application.

The exposure governance management function entity may be the EGMF shown in FIG. 1 or FIG. 2, the network slice management function entity may be the NSMF shown in FIG. 2, the management data analytics function entity may be the MDAF shown in FIG. 2, and the network slice subnet management function entity may be the NSSMF shown in FIG. 2.

It should be noted that the cross domain management device or the domain management device may be the communication network management device shown in FIG. 3, and may be used by an operator to manage a provided network service.

It should be understood that the devices or function nodes included in the system shown in FIG. 4 or FIG. 5 are merely described as examples, and constitute no limitation on embodiments of this application. Actually, the system shown in FIG. 4 or FIG. 5 may further include another network element, device, or function node that has an interaction relationship with the device or function node shown in the figure. This is not specifically limited herein.

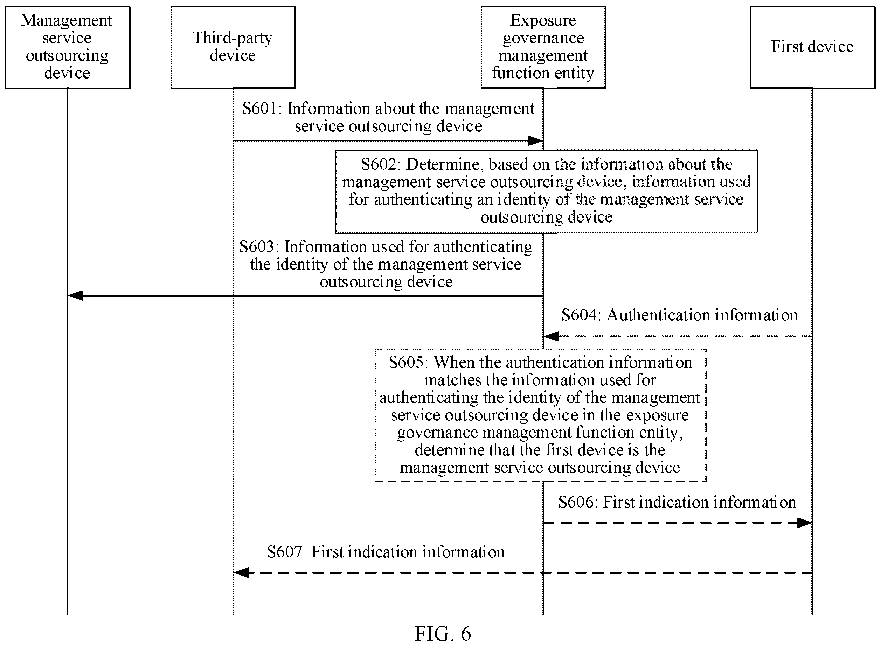

The following describes in detail the authentication method provided in embodiments of this application with reference to FIG. 6 to FIG. 8.

It should be noted that the authentication method provided in embodiments of this application is implemented based on a premise that a third party has signed a capability exposure commercial contract with a network service producer (network service producer, NSP) or a network operator (network operation producer, NOP) (briefly referred to as an operator below). In other words, the operator provides a network service (for example, an NPN or a slice network) for the third party, and the operator may sign a commercial contract with the third party, to expose a part of network management capabilities to the third party, so that the third party can manage a serving network.

In addition, in embodiments of this application, a management service outsourcing device may be understood as a device used by a management service outsourcing party to perform network management, and a third-party device may be understood as a device used by the third party to perform network management.

In other words, when the operator provides the network service for the third party, the third party may implement the network management through the third-party device based on the signed commercial contract (for example, the network management capability provided by the operator for the third party). Further, the third party may also outsource, to another management agent having a network management capability, that is, the management service outsourcing party, the network management capability exposed by the operator. It may be understood that, when the third party outsources the network management capability exposed by the operator, the third party also needs to sign a commercial contract with the management service outsourcing party on a network management capability that can be invoked by the management service outsourcing party and a management requirement of the third party. The management service outsourcing party may manage, through the management service outsourcing device based on the signed commercial contract, a network serving the third party.

When the management service outsourcing party invokes a corresponding network management capability through the management service outsourcing device, the management service outsourcing device also needs to pass identity authentication of the operator. Therefore, an embodiment of this application provides an authentication method, so that the operator can perform identity authentication on the management service outsourcing party.

For example, the authentication system in FIG. 4 is used as an example. FIG. 6 is a schematic flowchart of an authentication method according to an embodiment of this application. The authentication method includes the following steps.

S601: A third-party device sends information about a management service outsourcing device to an exposure governance management function entity. Correspondingly, the exposure governance management function entity receives the information about the management service outsourcing device from the third-party device.

The management service outsourcing device is configured to invoke a network management capability exposed to the third-party device. The invoked network management capability may also represent an invoked management service.

Optionally, in this embodiment of this application, the information about the management service outsourcing device may include information about a management service that can be invoked by the management service outsourcing device and an identifier of the management service outsourcing device.

The information about the management service that can be invoked by the management service outsourcing device indicates information about a management service signed by the management service outsourcing device and the third-party device. For example, information about a management service signed by an operator and a third party includes one or more of a discovery service, a configuration service, a performance measurement service, or a fault alarm service.

It may be understood that, in this embodiment of this application, a management service outsourced by the third party to a management service outsourcing party may be a management service signed by the operator and the third party. In other words, the management service outsourced by the third party to the management service outsourcing party may be a management service subscribed by the third party from the operator, or may be a subset of a management service subscribed by the third party from the operator.

For example, it is assumed that the management service outsourced by the third party to the management service outsourcing party includes the performance measurement service and the fault alarm service. In this case, after identity authentication on the management service outsourcing device succeeds, the management service outsourcing device may invoke the two management services: the performance measurement service and the fault alarm service, to achieve a network management capability of network performance measurement and fault alarm.

In this embodiment of this application, the identifier of the management service outsourcing device may be a name of the management service outsourcing party (for example, an enterprise name) or a name of the management service outsourcing device, or may be a digital identifier indicating the management service outsourcing party or the management service outsourcing device, or may be an IP address of the management service outsourcing device. This is not limited in this embodiment of this application.

It should be noted that, in this embodiment of this application, there may be one or more management service outsourcing parties, and correspondingly, there may be one or more management service outsourcing devices. Further, the information about the management service outsourcing device may include information about one or more management service outsourcing devices. This is not limited in this embodiment of this application. In addition, management services that can be invoked by the management service outsourcing devices may be different. For example, a management service that can be invoked by a management service outsourcing device 1 is a discovery service, and a management service that can be invoked by a management service outsourcing device 2 is a performance measurement service and a fault alarm service. In a possible case, if the third party does not outsource the management service, the information about the management service outsourcing device may be empty.

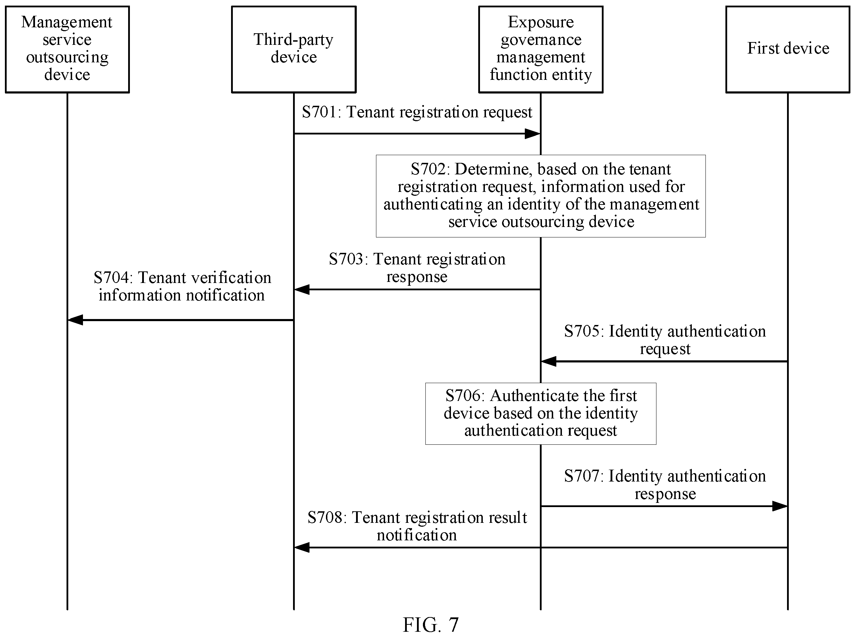

Optionally, in this embodiment of this application, when the third party does not complete tenant registration, the third-party device may further send information about the third-party device to the exposure governance management function entity. Correspondingly, the exposure governance management function entity receives the information about the third-party device from the third-party device. The information about the third-party device may include information about a management service signed with the operator, an identifier of a third-party customer (operator ID), and a tenant profile (tenant profile), and is used for identity authentication on the third-party device. For related descriptions of the identifier of the third-party customer (operator ID) and the tenant profile (tenant profile), refer to related content in S301. Details are not described herein again. For a specific related implementation of the solution, refer to the following method embodiment shown in FIG. 7. Details are not described herein again.

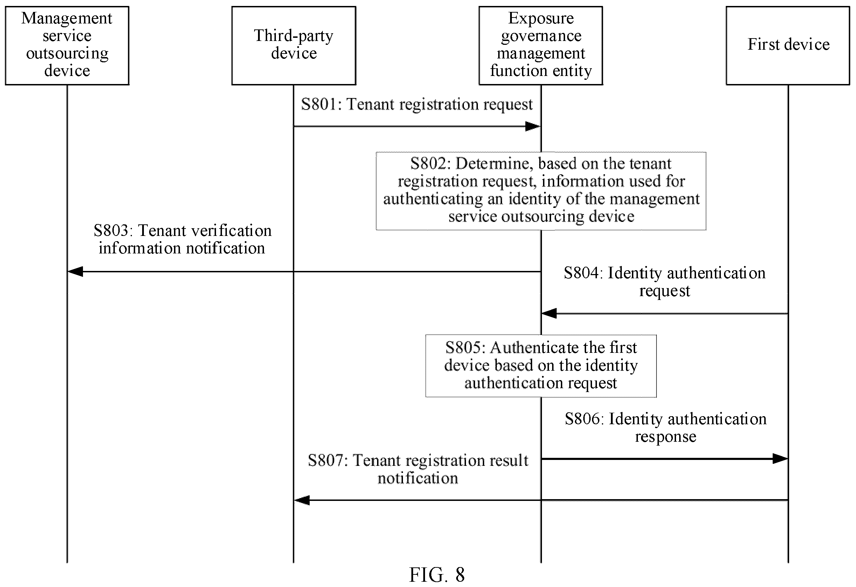

Optionally, in this embodiment of this application, when the third party completes tenant registration, the third-party device may further send a tenant ID (tenant ID) to the exposure governance management function entity. Correspondingly, the exposure governance management function entity receives the tenant ID from the third party, so that the exposure governance management function entity determines information about a management service outsourcing party of a corresponding tenant based on the tenant ID. It may be understood that, in this case, the exposure governance management function entity stores the information about the third-party device. For a specific related implementation of the solution, refer to the following method embodiment shown in FIG. 8. Details are not described herein again.

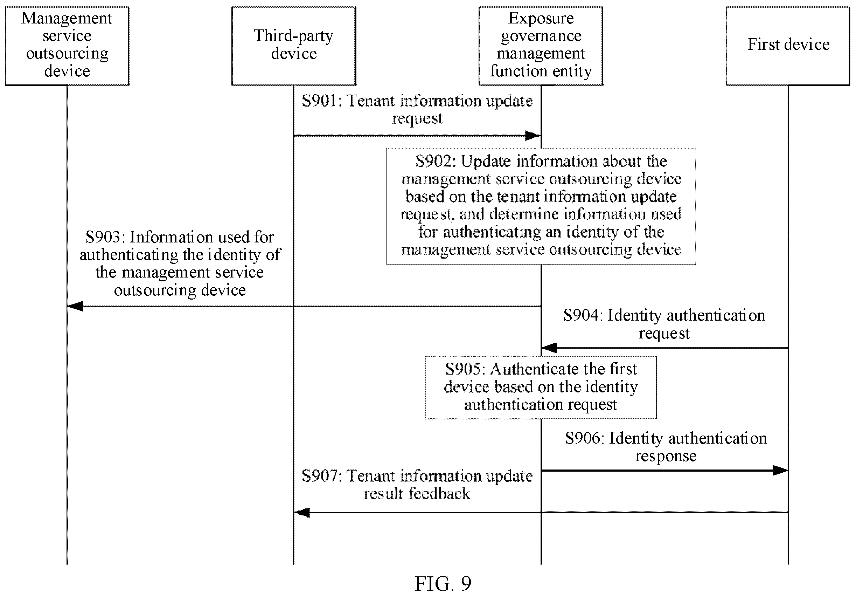

In a possible case, when the third party completes tenant registration and the management service outsourcing device changes, the third-party device may send second indication information to the exposure governance management function entity. Correspondingly, the exposure governance management function entity receives the second indication information from the third-party device. The second indication information indicates the exposure governance management function entity to perform one or more operations of addition, deletion, modification, or query on the information about the management service outsourcing device. For example, after the third-party device completes the tenant registration and performs network management for a period of time, the third party outsources the management service to the management service outsourcing party, or the third party adds another management service outsourcing party based on the original management service outsourcing party. In this case, the second indication information carries information about the added management service outsourcing device. For another example, the third-party device completes the tenant registration, and there is a corresponding management service outsourcing party. However, the third party cancels a part or all of contracts signed with management service outsourcing parties or no longer outsources the management service after a contract expires. In this case, the second indication information carries information about a deleted management service outsourcing device. For a specific related implementation of the solution, refer to the following method embodiment shown in FIG. 9. Details are not described herein again.

S602: The exposure governance management function entity determines, based on the information about the management service outsourcing device, information used for authenticating an identity of the management service outsourcing device.

The information used for authenticating the identity of the management service outsourcing device may include a tenant ID and verification information. The verification information may be a token (token), a key, or the like. This is not limited in this embodiment of this application.

For example, after receiving the information about the management service outsourcing device, the exposure governance management function entity may determine, based on the information about the management service outsourcing device, whether the management service outsourcing device exists, to determine whether to generate the verification information for the management service outsourcing device. For example, the information about the management service outsourcing device is not empty, and the exposure governance management function entity may determine a quantity of management service outsourcing devices of the third party, that is, a quantity of management service outsourcing parties, based on the identifier of the management service outsourcing device in the information about the management service outsourcing device, to generate verification information for different management service outsourcing devices. In other words, each management service outsourcing device corresponds to one piece of verification information.

In addition, the exposure governance management function entity may create a tenant instance. The tenant instance is used for storing information about the third party and a management service outsourcing party. An attribute corresponding to the tenant instance may include the information about the third-party device and the information about the management service outsourcing device.

In this embodiment of this application, when the third party does not complete the tenant registration, the tenant ID is a unique identifier allocated to the third party in a management domain after the exposure governance management function entity successfully performs identity authentication on the third-party device based on the information about the third-party device. For a specific process, refer to S302 and S303. Details are not described herein again.

S603: The exposure governance management function entity sends the information used for authenticating the identity of the management service outsourcing device to the management service outsourcing device. Correspondingly, the management service outsourcing device receives, from the exposure governance management function entity, the information used for authenticating the identity of the management service outsourcing device.

In a possible design solution, the exposure governance management function entity may send, to the third-party device, the information used for authenticating the identity of the management service outsourcing device. Correspondingly, the third-party device receives, from the exposure governance management function entity, the information used for authenticating the identity of the management service outsourcing device.

Further, the third-party device sends the information used for authenticating the identity of the management service outsourcing device to the management service outsourcing device. Correspondingly, the management service outsourcing device receives, from the third-party device, the information used for authenticating the identity of the management service outsourcing device. Identity authentication may be completed on the management service outsourcing device based on the information used for authenticating the identity of the management service outsourcing device.

In another possible design solution, when the identifier of the management service outsourcing device is an IP address of the management service outsourcing device, or the information about the management service outsourcing device further includes an internet protocol (internet protocol, IP) address of the management service outsourcing device, the exposure governance management function entity may send the information used for authenticating the identity of the management service outsourcing device to the management service outsourcing device based on the IP address of the management service outsourcing device.

Based on the foregoing solution, the exposure governance management function entity may not only manage the third-party device and the management service outsourcing device based on the information about the management service outsourcing device sent by the third-party device, but also generate, based on the information about the management service outsourcing device, the information used for authenticating the identity of the management service outsourcing device and send the information used for authenticating the identity of the management service outsourcing device to the management service outsourcing device. Therefore, authentication on the management service outsourcing device can be implemented based on the information used for authenticating the identity of the management service outsourcing device, so that network management reliability can be improved, and the management service outsourcing device can be allowed to implement real-time and refined wireless network information monitoring on a network serving the third party, thereby improving network management efficiency of the third-party device.

Further, as shown in FIG. 6, the authentication method provided in this embodiment of this application further includes the following steps.

S604: A first device sends authentication information to the exposure governance management function entity. Correspondingly, the exposure governance management function entity receives the authentication information from the first device.

In this embodiment of this application, the first device may be understood as a to-be-authenticated device that requests to invoke a management service.

In this embodiment of this application, if the first device is the management service outsourcing device, the authentication information includes the information used for authenticating the identity of the management service outsourcing device. In this scenario, in a possible design solution, before the first device sends the authentication information to the exposure governance management function entity, the first device may receive, from the exposure governance management function entity, the information used for authenticating the identity of the management service outsourcing device. In another possible design solution, before the first device sends the authentication information to the exposure governance management function entity, the first device may receive, from the third-party device, the information used for authenticating the identity of the management service outsourcing device.

In this embodiment of this application, if the first device is not the management service outsourcing device, the authentication information does not include the information used for authenticating the identity of the management service outsourcing device, or the information used for authenticating the identity of the management service outsourcing device included in the authentication information is incorrect or false. This is not limited in this embodiment of this application.

S605: When the authentication information matches the information used for authenticating the identity of the management service outsourcing device in the exposure governance management function entity, the exposure governance management function entity determines that the first device is the management service outsourcing device.

For example, after receiving the authentication information of the first device, the exposure governance management function entity compares the authentication information with the information used for authenticating the identity of the management service outsourcing device.

If the authentication information matches the information used for authenticating the identity of the management service outsourcing device, for example, a tenant ID and verification information in the authentication information is the same as the tenant ID and the verification information in the information used for authenticating the identity of the management service outsourcing device, the exposure governance management function entity may determine that the first device is the management service outsourcing device. In this case, it may be considered that identity authentication on the first device succeeds. Further, the exposure governance management function entity may update an authentication state of the management service outsourcing device corresponding to the first device. For example, the authentication state is updated from "unauthenticated" to "authenticated".

S606: The exposure governance management function entity sends first indication information to the first device. Correspondingly, the first device receives the first indication information from the exposure governance management function entity.

The first indication information indicates that authentication on the first device succeeds, in other words, the first indication information indicates an authentication result for the first device. The first indication information may carry invocation information of a corresponding management service, for example, configuration information for invoking a management service, so that the first device requests, based on the invocation information, the management domain to invoke the management service.

S607: The first device sends the first indication information to the third-party device. Correspondingly, the third-party device receives the first indication information from the first device.

For example, the third-party device may determine, based on the first indication information, that the identity authentication on the first device succeeds, and determine that the first device can invoke a corresponding management service to perform network management without a need for the third-party device to perform the corresponding management service. For example, the management service signed by the third party and the operator includes a discovery service, a configuration service, a performance measurement service, and a fault alarm service, a management service outsourced to the first device includes a performance measurement service and a fault alarm service, and the first device returns the first indication information indicating that the identity authentication succeeds. In this case, the third-party device does not need to invoke the performance measurement service and the fault alarm service to perform related network management, so that a type of the management service performed by the third-party device can be updated at any time.

It may be understood that S607 is an optional step. For example, when the authentication on the first device fails, the first device may not send the first indication information to the third-party device.

Further, the first device may invoke, through the exposure governance management function entity, the corresponding management service from a management function entity providing the corresponding management service, or may directly invoke the corresponding management service from a management function entity providing the corresponding management service. This is not limited in this embodiment of this application. For example, the first device may first send an invocation request to the exposure governance management function entity to invoke a management service provided by a network slice subnet management function entity, and the exposure governance management function entity invokes a corresponding management service from the network slice subnet management function entity based on the invocation request, and then sends the corresponding management service to the first device. For another example, the first device sends an invocation request to a network slice subnet management function entity, to obtain a management service provided by the network slice subnet management function entity.

It should be noted that, if the authentication information does not match the information used for authenticating the identity of the management service outsourcing device, S605 may be replaced with the following: When the authentication information does not match the information used for authenticating the identity of the management service outsourcing device in the exposure governance management function entity, the exposure governance management function entity determines that the first device is not the management service outsourcing device. For example, if the authentication information does not carry the tenant ID or the verification information, or the tenant ID carried in the authentication information is different from the tenant ID of the information used for authenticating the identity of the management service outsourcing device, and/or the verification information carried in the authentication information is different from the verification information of the information used for authenticating the identity of the management service outsourcing device, the exposure governance management function entity determines that the first device is not the management service outsourcing device. In this case, it may be considered that the identity authentication on the first device fails. In this case, S606 and S607 may not be performed, or S606 is performed and S607 is not performed. In this case, the exposure governance management function entity may use the first indication information to indicate that the authentication on the first device fails, or may use other indication information to indicate that the authentication on the first device fails. This is not limited in this embodiment of this application.

Based on the authentication method shown in FIG. 6, the exposure governance management function entity may not only manage the third-party device and the management service outsourcing device based on the information about the management service outsourcing device sent by the third-party device, but also generate, based on the information about the management service outsourcing device, the information used for authenticating the identity of the management service outsourcing device and send the information used for authenticating the identity of the management service outsourcing device to the management service outsourcing device, so that network management reliability can be improved, and the management service outsourcing device can be allowed to implement real-time and refined wireless network information monitoring on the network serving the third party, thereby improving the network management efficiency of the third-party device. Further, the exposure governance management function entity receives the authentication information of the to-be-authenticated device (the first device), and may identify the authentication information based on the information used for authenticating the identity of the management service outsourcing device, to complete authentication on the management service outsourcing device, thereby improving authentication reliability. When the authentication on the first device succeeds, the exposure governance management function entity may further send the first indication information, to indicate the authentication result, so that the first device invokes the management service, to manage the network serving the third party.

The following describes in detail the authentication method provided in this embodiment of this application with reference to a specific application scenario. The authentication method provided in this embodiment of this application is applicable to a tenant registration scenario, and the exposure governance management function entity may be the EGMF in FIG. 1 or FIG. 2.

For example, FIG. 7 is a schematic flowchart of another authentication method according to an embodiment of this application. The authentication method includes the following steps.

S701: A third-party device sends a tenant registration request to an exposure governance management function entity. Correspondingly, the exposure governance management function entity receives the tenant registration request from the third-party device.

The tenant registration request carries information about the third-party device and information about a management service outsourcing device. For related descriptions of the information about the third-party device and the information about the management service outsourcing device, refer to related descriptions in S601. Details are not described herein again.

S702: The exposure governance management function entity determines, based on the tenant registration request, information used for authenticating an identity of the management service outsourcing device.

For example, after receiving the tenant registration request, the exposure governance management function entity creates a tenant instance based on the information about the third-party device and the information about the management service outsourcing device in the tenant registration request. An attribute corresponding to the tenant instance may include an identifier of the third-party device, information about a management service subscribed by a third party and an operator, an identifier of the management service outsourcing device, information about a management service subscribed by a management service outsourcing party and the third party, and the like.

Further, the exposure governance management function entity may perform identity authentication on the third-party device based on the information about the third-party device in the tenant registration request. After the authentication on the third-party device succeeds, the exposure governance management function entity generates a tenant ID, and then generates verification information based on the information about the management service outsourcing device, to obtain the information used for authenticating the identity of the management service outsourcing device. For a specific process, refer to related content of S602. Details are not described herein again.

S703: The exposure governance management function entity sends a tenant registration response to the third-party device. Correspondingly, the third-party device receives the tenant registration response from the exposure governance management function entity.

The tenant registration response carries the information used for authenticating the identity of the management service outsourcing device.

S704: The third-party device sends a tenant verification information notification to the management service outsourcing device. Correspondingly, the management service outsourcing device receives the tenant verification information notification from the third-party device.

The tenant verification information notification carries the information used for authenticating the identity of the management service outsourcing device.

S705: A first device sends an identity authentication request to the exposure governance management function entity. Correspondingly, the exposure governance management function entity receives the identity authentication request from the first device.

The identity authentication request carries authentication information.

If the first device is the management service outsourcing device, the authentication information includes the information used for authenticating the identity of the management service outsourcing device, and the first device may obtain, based on S704, the information used for authenticating the identity of the management service outsourcing device.

If the first device is not the management service outsourcing device, the authentication information does not include the information used for authenticating the identity of the management service outsourcing device, or the information used for authenticating the identity of the management service outsourcing device is incorrect or false. This is not limited in this application.

S706: The exposure governance management function entity authenticates the first device based on the identity authentication request.

For example, the exposure governance management function entity compares the authentication information in the identity authentication request with the information used for authenticating the identity of the management service outsourcing device, to determine whether the first device is the management service outsourcing device. For a specific process, refer to related descriptions in S605. Details are not described herein again.

S707: The exposure governance management function entity sends an identity authentication response to the first device. Correspondingly, the first device receives the identity authentication response from the exposure governance management function entity.

The identity authentication response carries first indication information. For related descriptions of the first indication information, refer to related content in S606. Details are not described herein again.

S708: The first device sends a tenant registration result notification to the third-party device. Correspondingly, the third-party device receives the tenant registration result notification from the first device.

The tenant registration result notification carries the first indication information. It may be understood that an authentication result for the third-party device may also be indicated by the first indication information, or may be indicated by other indication information. This is not limited herein.

In addition, if authentication on the first device fails, the tenant registration result notification may not carry the first indication information. For a specific process of S708, refer to S607.

Further, the first device may invoke, through the exposure governance management function entity, a corresponding management service from a management function entity providing the corresponding management service, or may directly invoke a corresponding management service from a management function entity providing the corresponding management service. This is not limited in this embodiment of this application. For example, the first device may first send an invocation request to the exposure governance management function entity to invoke a management service provided by a network slice subnet management function entity, and the exposure governance management function entity invokes a corresponding management service from the network slice subnet management function entity based on the invocation request, and then sends the corresponding management service to the first device. For another example, the first device sends an invocation request to a network slice subnet management function entity, to obtain a management service provided by the network slice subnet management function entity.

In addition, if the exposure governance management function entity determines that the first device is not the management service outsourcing device in S706, in other words, the authentication information does not match the information used for authenticating the identity of the management service outsourcing device, for example, if the authentication information does not carry a tenant ID or verification information, or a tenant ID carried in the authentication information is different from a tenant ID of the information used for authenticating the identity of the management service outsourcing device, and/or verification information carried in the authentication information is different from verification information of the information used for authenticating the identity of the management service outsourcing device, the exposure governance management function entity determines that the first device is not the management service outsourcing device. In this case, it may be considered that the identity authentication on the first device fails. In this case, S707 and S708 may not be performed, or S707 is performed and S708 is not performed. In this case, the first indication information carried in the identity authentication response in S707 indicates that the authentication on the first device fails, or other indication information may be carried to indicate that the authentication on the first device fails. This is not limited in this embodiment of this application.

According to the authentication method shown in FIG. 7, based on a tenant registration process, registration authentication on the third party and the management service outsourcing party may be completed through the exposure governance management function entity, and the operator can manage the third party and the management service outsourcing party.

In the tenant registration scenario, the authentication method provided in this embodiment of this application may be implemented in another implementation. For example, FIG. 8 is a schematic flowchart of still another authentication method according to an embodiment of this application. The authentication method includes the following steps.

S801: A third-party device sends a tenant registration request to an exposure governance management function entity. Correspondingly, the exposure governance management function entity receives the tenant registration request from the third-party device.

A difference between the tenant registration request and that in S701 is that information about a management service outsourcing device carried in the tenant registration request further includes an IP address of the management service outsourcing device, or an identifier of the management service outsourcing device in the information about the management service outsourcing device is an IP address of the management service outsourcing device. For other related content, refer to related descriptions in S701. Details are not described herein again.

S802: The exposure governance management function entity determines, based on the tenant registration request, information used for authenticating an identity of the management service outsourcing device.

For a specific process of S802, refer to related descriptions in S602 or S702. Details are not described herein again.

S803: The exposure governance management function entity sends a tenant verification information notification to the management service outsourcing device. Correspondingly, the management service outsourcing device receives the tenant verification information notification from the exposure governance management function entity.

The tenant verification information notification carries the information used for authenticating the identity of the management service outsourcing device. Because the tenant registration request in S801 carries the IP address of the management service outsourcing device, after generating the information used for authenticating the identity of the management service outsourcing device, the exposure governance management function entity may directly send the tenant verification information notification to the management service outsourcing device based on the IP address of the management service outsourcing device, so that the management service outsourcing device can obtain the information used for authenticating the identity of the management service outsourcing device. In comparison with the implementation process of S703 and S704, authentication efficiency can be improved.

S804: A first device sends an identity authentication request to the exposure governance management function entity. Correspondingly, the exposure governance management function entity receives the identity authentication request from the first device.

S805: The exposure governance management function entity authenticates the first device based on the identity authentication request.

S806: The exposure governance management function entity sends an identity authentication response to the first device. Correspondingly, the first device receives the identity authentication response from the exposure governance management function entity.

S807: The first device sends a tenant registration result notification to the third-party device.

For a specific implementation process of S804 to S807, refer to related descriptions in S705 to S708. Details are not described herein again.

Based on the authentication method shown in FIG. 8, in comparison with the authentication method shown in FIG. 7, the exposure governance management function entity may directly send an identity verification information notification to the management service outsourcing device, so that the management service outsourcing device can obtain authentication information, thereby improving authentication efficiency for the management service outsourcing device, and further improving network management efficiency of a management service outsourcing party.

In the authentication methods shown in FIG. 7 and FIG. 8, authentication on the management service outsourcing device is implemented during authentication on the third-party device. Further, the authentication method provided in this embodiment of this application is further applicable to implementation after the third-party device completes the tenant registration request.

For example, before completing the tenant registration request, the third-party device does not have a signed management service outsourcing device. In other words, the information about the management service outsourcing device in the tenant registration request may be empty. After completing the tenant registration request, the third-party device performs network management for a period of time and outsources network management. In this case, there is a corresponding management service outsourcing device. The third-party device may send second indication information to the exposure governance management function entity, to update the information about the management service outsourcing device, so that identity authentication on an updated management service outsourcing device is implemented.

For another example, when completing the tenant registration request, the third-party device has a signed management service outsourcing device. In addition, after the third-party device and the signed management service outsourcing device jointly perform network management for a period of time, a management service outsourcing device is added or removed. The third-party device may also send second indication information to the exposure governance management function entity, to update the information about the management service outsourcing device, so that identity authentication on an updated management service outsourcing device is implemented.

In the following embodiment of this application, still another implementation of the authentication method provided in this embodiment of this application is described in detail by using an example in which the third-party device does not have a signed management service outsourcing device before completing the tenant registration request, and after completing the tenant registration request, the third-party device implements network management for a period of time and outsources network management. The exposure governance management function entity may be the EGMF in FIG. 1 or FIG. 2.

For example, FIG. 9 is a schematic flowchart of still another authentication method according to an embodiment of this application. The authentication method includes the following steps.

S901: A third-party device sends a tenant information update request to an exposure governance management function entity. Correspondingly, the exposure governance management function entity receives the tenant information update request from the third-party device.

The tenant information update request carries a tenant ID, information about a management service outsourcing device, and second indication information. The information about the management service outsourcing device includes information about an added management service outsourcing device. The second indication information indicates the exposure governance management function entity to perform an addition operation on the information about the management service outsourcing device.

In a possible design solution, the tenant ID and the information about the management service outsourcing device may also be included in the second indication information, or the information about the management service outsourcing device is included in the second indication information, and the tenant ID is not included in the second indication information. This is not limited in this embodiment of this application.

S902: The exposure governance management function entity updates the information about the management service outsourcing device based on the tenant information update request, and determines information used for authenticating an identity of the management service outsourcing device.

The information used for authenticating the identity of the management service outsourcing device may include a tenant ID and verification information.

For example, after receiving the tenant information update request, the exposure governance management function entity updates, based on the tenant ID, the information about the management service outsourcing device, and the second indication information carried in the tenant information update request, a tenant instance corresponding to the tenant ID, for example, adds the information about the management service outsourcing device, and generates the verification information based on the information about the added management service outsourcing device. For a specific process of generating the verification information, refer to related content in S602, S702, or S802. Details are not described herein again.

It should be noted that, when the third-party device has a signed management service outsourcing device during tenant registration, and a management service outsourcing device is added or deleted, the exposure governance management function entity may add or delete, based on information about the added or deleted management service outsourcing device, corresponding information used for authenticating an identity of the management service outsourcing device, or may re-determine, after updating the information about the management service outsourcing device, information used for authenticating identities of all management service outsourcing devices. This is not limited in this embodiment of this application.

S903: The exposure governance management function entity sends the information used for authenticating the identity of the management service outsourcing device to the management service outsourcing device.

In a possible design solution, the exposure governance management function entity sends a tenant information update response to the third-party device. Correspondingly, the third-party device receives the tenant information update response from the exposure governance management function entity. The tenant information update response carries the information used for authenticating the identity of the management service outsourcing device. Then, the third-party device sends a tenant information update notification to the management service outsourcing device. Correspondingly, the management service outsourcing device receives the tenant information update notification from the third-party device. The tenant information update notification carries the information used for authenticating the identity of the management service outsourcing device. For a specific implementation process, refer to related content in S603 or S703 and S704. Details are not described herein again.

In another possible design solution, the exposure governance management function entity may directly send an identity verification information notification to the management service outsourcing device. Correspondingly, the management service outsourcing device receives the identity verification information notification from the exposure governance management function entity. The identity verification information notification carries the information used for authenticating the identity of the management service outsourcing device. For a specific implementation process, refer to related content in S603 or S803. Details are not described herein again.

S904: A first device sends an identity authentication request to the exposure governance management function entity. Correspondingly, the exposure governance management function entity receives the identity authentication request from the first device.

S905: The exposure governance management function entity authenticates the first device based on the identity authentication request.

S906: The exposure governance management function entity sends an identity authentication response to the first device. Correspondingly, the first device receives the identity authentication response from the exposure governance management function entity.

For a specific implementation process of S904 to S906, refer to related content in S604 to S606, S705 to S707, or S804 to S806. Details are not described herein again.

S907: The first device sends a tenant information update result feedback to the third-party device. Correspondingly, the third-party device receives the tenant information update result feedback from the first device.

The tenant information update result feedback carries first indication information. For related descriptions of the first indication information, refer to related content in S606, S708, or S807. Details are not described herein again.

Based on the authentication method shown in FIG. 9, the exposure governance management function entity may transfer information about a management service outsourcing party by using a tenant information update message, and may update authentication information based on a change of the information about the management service outsourcing device, so that an operator completes identity authentication on the management service outsourcing party, thereby improving network management reliability.

It should be noted that message names such as "tenant verification information notification" and "tenant authentication request" may alternatively be replaced with other message names. This is not limited in this embodiment of this application.

Based on the authentication methods shown in FIG. 6 to FIG. 9, the exposure governance management function entity may generate and send, based on the information about the management service outsourcing device sent by the third-party device, the information used for authenticating the identity of the management service outsourcing device. When authenticating the management service outsourcing device, the exposure governance management function entity may determine, based on the received authentication information and the information used for authenticating the identity of the management service outsourcing device, whether a to-be-authenticated device is the management service outsourcing device, so that the management service outsourcing party can be authenticated. Therefore, based on the information about the management service outsourcing device and the exposure governance management function entity, not only tenant management can be implemented, but also authentication on the management service outsourcing party by the operator can be implemented, so that a network management capability of the third party can be improved and more refined network management can be implemented.

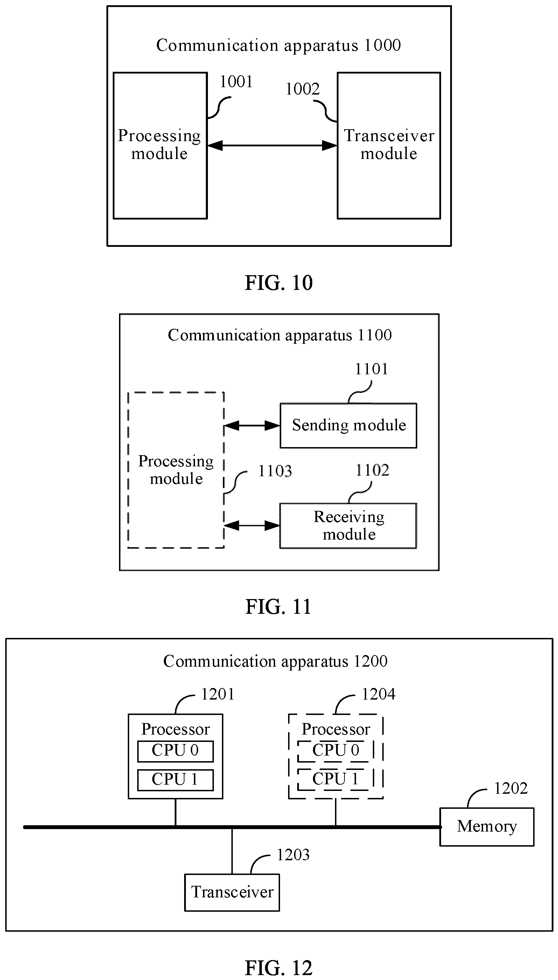

The authentication method provided in embodiments of this application is described above in detail with reference to FIG. 4 to FIG. 9. The following describes in detail a communication apparatus configured to perform the authentication method provided in embodiments of this application with reference to FIG. 10 to FIG. 12.

For example, FIG. 10 is a diagram of a structure of a communication apparatus according to an embodiment of this application. As shown in FIG. 10, the communication apparatus 1000 includes a processing module 1001 and a transceiver module 1002. For ease of description, FIG. 10 merely shows main components of the communication apparatus.

In some embodiments, the communication apparatus 1000 is applicable to the system shown in FIG. 4 or FIG. 5, and perform a function of the exposure governance management function entity in the method shown in any one of FIG. 6 to FIG. 9.

The transceiver module 1002 is configured to receive information about a management service outsourcing device from a third-party device. The management service outsourcing device is configured to invoke a network management capability exposed to the third-party device, and the information about the management service outsourcing device includes information about a management service that can be invoked by the management service outsourcing device.

The processing module 1001 is configured to determine, based on the information about the management service outsourcing device, information used for authenticating an identity of the management service outsourcing device.

The transceiver module 1002 is further configured to send the information used for authenticating the identity of the management service outsourcing device to the management service outsourcing device.

Further, the transceiver module 1002 is configured to receive authentication information from a first device.

The processing module 1001 is configured to: when the authentication information matches the information used for authenticating the identity of the management service outsourcing device, determine that the first device is the management service outsourcing device.

In a possible design solution, the transceiver module 1002 is configured to send first indication information to the first device, where the first indication information indicates that authentication on the first device succeeds.

In a possible design solution, the information about the management service outsourcing device may include an IP address of the management service outsourcing device. The transceiver module 1002 is configured to send the information used for authenticating the identity of the management service outsourcing device to the management service outsourcing device based on the IP address of the management service outsourcing device.

In a possible design solution, the transceiver module 1002 is configured to receive second indication information from the third-party device, where the second indication information indicates an exposure governance management function entity to perform one or more operations of addition, deletion, modification, or query on the information about the management service outsourcing device.

Optionally, the transceiver module 1002 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is enabled to perform a function of the exposure governance management function entity in the method shown in any one of FIG. 6 to FIG. 9.

It should be noted that the communication apparatus 1000 may be a network device, may be a chip (system) or another part or component that may be disposed in a network device, or may be an apparatus including a network device. This is not limited in this application.

In addition, for technical effects of the communication apparatus 1000, refer to the technical effects of the authentication method shown in FIG. 6 to FIG. 9. Details are not described herein again.

In some other embodiments, the communication apparatus 1000 is applicable to the system shown in FIG. 4 or FIG. 5, and perform a function of the first device or the management service outsourcing device in the method shown in any one of FIG. 6 to FIG. 9.

The processing module 1001 is configured to obtain authentication information, where the communication apparatus 1000 is a management service outsourcing device, and the management service outsourcing device is configured to invoke a network management capability exposed to a third-party device.

The transceiver module 1002 is configured to send the authentication information to an exposure governance management function entity.

In a possible design solution, the authentication information may include information used for authenticating an identity of the management service outsourcing device. The transceiver module 1002 is configured to receive, from the exposure governance management function entity, the information used for authenticating the identity of the management service outsourcing device.

In another possible design solution, the authentication information may include information used for authenticating an identity of the management service outsourcing device. The transceiver module 1002 is configured to receive, from the third-party device, the information used for authenticating the identity of the management service outsourcing device.

In a possible design solution, the transceiver module 1002 is configured to receive first indication information from the exposure governance management function entity, where the first indication information indicates that authentication on the apparatus succeeds.

In a possible design solution, the transceiver module 1002 is configured to send the first indication information to the third-party device.

Optionally, the transceiver module 1002 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is enabled to perform a function of the first device or the management service outsourcing device in the method shown in any one of FIG. 6 to FIG. 9.

It should be noted that the communication apparatus 1000 may be a network device, may be a chip (system) or another part or component that may be disposed in a network device, or may be an apparatus including a network device. This is not limited in this application.

In addition, for technical effects of the communication apparatus 1000, refer to the technical effects of the authentication method shown in FIG. 6 to FIG. 9. Details are not described herein again.

For example, FIG. 11 is a diagram of a structure of another communication apparatus according to an embodiment of this application. As shown in FIG. 11, the communication apparatus 1100 includes a sending module 1101 and a receiving module 1102. For ease of description, FIG. 11 merely shows main components of the communication apparatus.

The communication apparatus 1100 is applicable to the system shown in FIG. 4 or FIG. 5, and perform a function of the third-party device in the method shown in any one of FIG. 6 to FIG. 9.

The sending module 1101 is configured to send information about a management service outsourcing device to an exposure governance management function entity. The management service outsourcing device is configured to invoke a network management capability exposed to the apparatus, and the information about the management service outsourcing device includes information about a management service that can be invoked by the management service outsourcing device.

The receiving module 1102 is configured to receive, from the exposure governance management function entity, information used for authenticating an identity of the management service outsourcing device, where the information used for authenticating the identity of the management service outsourcing device is determined based on the information about the management service outsourcing device.

The sending module 1101 is further configured to send the information used for authenticating the identity of the management service outsourcing device to the management service outsourcing device.

In a possible design solution, the receiving module 1102 is further configured to receive first indication information from a first device, where the first indication information indicates that authentication on the first device succeeds, and the first device is the management service outsourcing device.

In a possible design solution, the sending module 1101 is further configured to send second indication information to the exposure governance management function entity, where the second indication information indicates the exposure governance management function entity to perform one or more operations of addition, deletion, modification, or query on the information about the management service outsourcing device.

Optionally, the sending module 1101 and the receiving module 1102 may be integrated into one module, for example, a transceiver module (not shown in FIG. 11). The transceiver module is configured to implement a sending function and a receiving function of the communication apparatus 1100.

Optionally, the communication apparatus 1100 may further include a processing module 1103. The processing module 1103 is configured to implement a processing function of the communication apparatus 1100.

Optionally, the communication apparatus 1100 may further include a storage module (not shown in FIG. 11). The storage module stores a program or instructions. When the processing module executes the program or the instructions, the communication apparatus 1100 is enabled to perform a function of the third-party device in the method shown in any one of FIG. 6 to FIG. 9.

It should be noted that the communication apparatus 1100 may be a network device, for example, a third-party device, may be a chip (system) or another part or component that may be disposed in a network device, or may be an apparatus including a network device. This is not limited in this application.

In addition, for technical effects of the communication apparatus 1100, refer to the technical effects of the authentication method shown in FIG. 6 to FIG. 9. Details are not described herein again.

For example, FIG. 12 is a diagram of a structure of still another communication apparatus according to an embodiment of this application. The communication apparatus may be a network device, for example, the foregoing exposure governance management function entity, third-party device, first device, or management service outsourcing device, or may be a chip (system) or another part or component that may be disposed in a network device. As shown in FIG. 12, the communication apparatus 1200 may include a processor 1201. Optionally, the communication apparatus 1200 may further include a memory 1202 and/or a transceiver 1203. The processor 1201 is coupled to the memory 1202 and the transceiver 1203, for example, may be connected to the memory 1202 and the transceiver 1203 through a communication bus.

The following describes in detail each component of the communication apparatus 1200 with reference to FIG. 12.

The processor 1201 is a control center of the communication apparatus 1200, and may be a processor, or may be a generic term of a plurality of processing elements. For example, the processor 1201 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1201 may perform various functions of the communication apparatus 1200 by running or executing a software program stored in the memory 1202 and invoking data stored in the memory 1202, for example, perform the method shown in FIG. 6 to FIG. 9.

During specific implementation, in an embodiment, the processor 1201 may include one or more CPUs, for example, a CPU 0 and a CPU 1 shown in FIG. 12.

During specific implementation, in an embodiment, the communication apparatus 1200 may also include a plurality of processors, for example, the processor 1201 and a processor 1204 shown in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

The memory 1202 is configured to store a software program for executing the solution of this application, and the processor 1201 controls execution of the software program. For a specific implementation, refer to the foregoing method embodiments. Details are not described herein again.

Optionally, the memory 1202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in the form of instructions or a data structure and that can be accessed by a computer. However, this is not limited thereto. The memory 1202 may be integrated with the processor 1201, or may exist independently, and is coupled to the processor 1201 by using an interface circuit (not shown in FIG. 12) of the communication apparatus 1200. This is not specifically limited in embodiments of this application.

The transceiver 1203 is configured to communicate with another communication apparatus. For example, the communication apparatus 1200 is a terminal device, and the transceiver 1203 may be configured to communicate with a network device or communicate with another terminal device. For another example, the communication apparatus 1200 is a network device, and the transceiver 1203 may be configured to communicate with a terminal device or communicate with another network device.

Optionally, the transceiver 1203 may include a receiver and a transmitter (not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 by using the interface circuit (not shown in FIG. 12) of the communication apparatus 1200. This is not specifically limited in embodiments of this application.

It should be noted that the structure of the communication apparatus 1200 shown in FIG. 12 does not constitute a limitation on the communication apparatus. An actual communication apparatus may include more or fewer components than those shown in the figure, combine some components, or have different component arrangement.

In addition, for technical effects of the communication apparatus 1200, refer to the technical effects of the method in the foregoing method embodiments. Details are not described herein again.

An embodiment of this application further provides an authentication system. The authentication system includes an exposure governance management function entity, a third-party device, and a management service outsourcing device.

Optionally, the authentication system may further include a first device.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may also be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example but not limited description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, the foregoing embodiments may be implemented completely or partially in the form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in the form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, wherein the method comprises:
receiving, by an exposure governance management function entity, information about a management service outsourcing device from a third-party device, wherein the management service outsourcing device is configured to invoke a network management capability exposed to the third-party device, and the information about the management service outsourcing device comprises information about a management service that can be invoked by the management service outsourcing device;
determining, by the exposure governance management function entity based on the information about the management service outsourcing device, information used for authenticating an identity of the management service outsourcing device; and
sending, by the exposure governance management function entity, the information used for authenticating the identity of the management service outsourcing device to the management service outsourcing device.

2. The method according to claim 1, wherein the method further comprises:
receiving, by the exposure governance management function entity, authentication information from a first device, wherein
when the authentication information matches the information used for authenticating the identity of the management service outsourcing device, determining, by the exposure governance management function entity, that the first device is the management service outsourcing device.

3. The method according to claim 2, wherein the method further comprises:
sending, by the exposure governance management function entity, first indication information to the first device, wherein the first indication information indicates that authentication on the first device succeeds.

4. The method according to any one of claims 1 to 3, wherein the information about the management service outsourcing device comprises an internet protocol IP address of the management service outsourcing device; and
the sending, by the exposure governance management function entity, the information used for authenticating the identity of the management service outsourcing device comprises:
sending, by the exposure governance management function entity, the information used for authenticating the identity of the management service outsourcing device to the management service outsourcing device based on the IP address of the management service outsourcing device.

5. The method according to any one of claims 1 to 4, wherein the method further comprises:
receiving, by the exposure governance management function entity, second indication information from the third-party device, wherein the second indication information indicates the exposure governance management function entity to perform one or more operations of addition, deletion, modification, or query on the information about the management service outsourcing device.

6. An authentication method, wherein the method comprises:
sending, by a third-party device, information about a management service outsourcing device to an exposure governance management function entity, wherein the management service outsourcing device is configured to invoke a network management capability exposed to the third-party device, and the information about the management service outsourcing device comprises information about a management service that can be invoked by the management service outsourcing device;
receiving, by the third-party device from the exposure governance management function entity, information used for authenticating an identity of the management service outsourcing device, wherein the information used for authenticating the identity of the management service outsourcing device is determined based on the information about the management service outsourcing device; and
sending, by the third-party device, the information used for authenticating the identity of the management service outsourcing device to the management service outsourcing device.

7. The method according to claim 6, wherein the method further comprises:
receiving, by the third-party device, first indication information from a first device, wherein the first indication information indicates that authentication on the first device succeeds, and the first device is the management service outsourcing device.

8. The method according to claim 6 or 7, wherein the method further comprises:
sending, by the third-party device, second indication information to the exposure governance management function entity, wherein the second indication information indicates the exposure governance management function entity to perform one or more operations of addition, deletion, modification, or query on the information about the management service outsourcing device.

9. An authentication method, wherein the method comprises:
obtaining, by a first device, authentication information, wherein the first device is a management service outsourcing device, and the management service outsourcing device is configured to invoke a network management capability exposed to a third-party device; and
sending, by the first device, the authentication information to an exposure governance management function entity.

10. The method according to claim 9, wherein the authentication information comprises information used for authenticating an identity of the management service outsourcing device; and
the obtaining, by a first device, authentication information comprises:
receiving, by the first device from the exposure governance management function entity, the information used for authenticating the identity of the management service outsourcing device.

11. The method according to claim 9, wherein the authentication information comprises information used for authenticating an identity of the management service outsourcing device; and
the obtaining, by a first device, authentication information comprises:
receiving, by the first device from the third-party device, the information used for authenticating the identity of the management service outsourcing device.

12. The method according to any one of claims 9 to 11, wherein the method further comprises:
receiving, by the first device, first indication information from the exposure governance management function entity, wherein the first indication information indicates that authentication on the first device succeeds.

13. The method according to claim 12, wherein the method further comprises:
sending, by the first device, the first indication information to the third-party device.

14. A communication apparatus, wherein the apparatus comprises a processing module and a transceiver module, wherein
the transceiver module is configured to receive information about a management service outsourcing device from a third-party device, wherein the management service outsourcing device is configured to invoke a network management capability exposed to the third-party device, and the information about the management service outsourcing device comprises information about a management service that can be invoked by the management service outsourcing device;
the processing module is configured to determine, based on the information about the management service outsourcing device, information used for authenticating an identity of the management service outsourcing device; and
the transceiver module is further configured to send the information used for authenticating the identity of the management service outsourcing device to the management service outsourcing device.

15. The apparatus according to claim 14, wherein
the transceiver module is configured to receive authentication information from a first device; and
the processing module is configured to: when the authentication information matches the information used for authenticating the identity of the management service outsourcing device, determine that the first device is the management service outsourcing device.

16. The apparatus according to claim 15, wherein
the transceiver module is configured to send first indication information to the first device, wherein the first indication information indicates that authentication on the first device succeeds.

17. The apparatus according to any one of claims 14 to 16, wherein the information about the management service outsourcing device comprises an internet protocol IP address of the management service outsourcing device; and
the transceiver module is configured to send the information used for authenticating the identity of the management service outsourcing device to the management service outsourcing device based on the IP address of the management service outsourcing device.

18. The apparatus according to any one of claims 14 to 17, wherein
the transceiver module is configured to receive second indication information from the third-party device, wherein the second indication information indicates the apparatus to perform one or more operations of addition, deletion, modification, or query on the information about the management service outsourcing device.

19. A communication apparatus, wherein the apparatus comprises a sending module and a receiving module, wherein
the sending module is configured to send information about a management service outsourcing device to an exposure governance management function entity, wherein the management service outsourcing device is configured to invoke a network management capability exposed to the apparatus, and the information about the management service outsourcing device comprises information about a management service that can be invoked by the management service outsourcing device;
the receiving module is configured to receive, from the exposure governance management function entity, information used for authenticating an identity of the management service outsourcing device, wherein the information used for authenticating the identity of the management service outsourcing device is determined based on the information about the management service outsourcing device; and
the sending module is further configured to send the information used for authenticating the identity of the management service outsourcing device to the management service outsourcing device.

20. The apparatus according to claim 19, wherein
the receiving module is further configured to receive first indication information from a first device, wherein the first indication information indicates that authentication on the first device succeeds, and the first device is the management service outsourcing device.

21. The apparatus according to claim 19 or 20, wherein
the sending module is further configured to send second indication information to the exposure governance management function entity, wherein the second indication information indicates the exposure governance management function entity to perform one or more operations of addition, deletion, modification, or query on the information about the management service outsourcing device.

22. A communication apparatus, wherein the apparatus comprises a processing module and a transceiver module, wherein
the processing module is configured to obtain authentication information, wherein the apparatus is a management service outsourcing device, and the management service outsourcing device is configured to invoke a network management capability exposed to a third-party device; and
the transceiver module is configured to send the authentication information to an exposure governance management function entity.

23. The apparatus according to claim 22, wherein the authentication information comprises information used for authenticating an identity of the management service outsourcing device; and
the transceiver module is configured to receive, from the exposure governance management function entity, the information used for authenticating the identity of the management service outsourcing device.

24. The apparatus according to claim 22, wherein the authentication information comprises information used for authenticating an identity of the management service outsourcing device; and
the transceiver module is configured to receive, from the third-party device, the information used for authenticating the identity of the management service outsourcing device.

25. The apparatus according to any one of claims 22 to 24, wherein
the transceiver module is configured to receive first indication information from the exposure governance management function entity, wherein the first indication information indicates that authentication on the apparatus succeeds.

26. The apparatus according to claim 25, wherein
the transceiver module is configured to send the first indication information to the third-party device.

27. A communication apparatus, comprising a processor, wherein the processor is coupled to a memory;
the memory is configured to store a computer program; and
the processor is configured to execute the computer program stored in the memory, to enable the communication apparatus to perform the method according to any one of claims 1 to 13.

28. A computer-readable storage medium, wherein the computer-readable storage medium stores a computer program or instructions, and when the computer program or the instructions are run on a computer, the computer is enabled to perform the method according to any one of claims 1 to 13.

29. A computer program product, wherein the computer program product comprises a computer program or instructions, and when the computer program or the instructions are run on a computer, the computer is enabled to perform the method according to any one of claims 1 to 13.
